(19) Europäisches Patentamt
European Patent Office
Office européen des brevets

(11) **EP 4 583 624 A1**

(12) **EUROPEAN PATENT APPLICATION**
published in accordance with Art. 153(4) EPC

(43) Date of publication:
**09.07.2025 Bulletin 2025/28**

(21) Application number: **24777805.3**

(22) Date of filing: **19.03.2024**

(51) International Patent Classification (IPC):
***H04W 76/10*** *(2018.01)*

(52) Cooperative Patent Classification (CPC):
**G08C 23/02; H04W 76/10**

(86) International application number:
**PCT/CN2024/082517**

(87) International publication number:
**WO 2024/199016 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 CN 202310341049**

(71) Applicants:
• **Guangzhou Shiyuan Electronic Technology
Company Limited
Guangzhou, Guangdong 510530 (CN)**

• **Guangzhou Shirui Electronics Co., Ltd.
Guangzhou, Guangdong 510663 (CN)**

(72) Inventor: **LIN, Guibin
Guangzhou, Guangdong 510530 (CN)**

(74) Representative: **Grünecker Patent- und
Rechtsanwälte
PartG mbB
Leopoldstraße 4
80802 München (DE)**

(54) **WIRELESS PAIRING METHOD, COMMUNICATION SYSTEM, AND COMPUTER READABLE STORAGE MEDIUM**

(57) The present disclosure discloses a wireless pairing method, a communication system and a computer-readable storage medium. Through the method according to the present disclosure, the second communication device transmits an ultrasonic signal carrying identification information when receiving the first broadcast data packet of the first communication device. Since the penetration performance of ultrasound is limited, the ultrasonic signal of the second communication device is only propagated in a single space, so that the first communication device can transmit a second broadcast data packet externally based on the received ultrasonic signal, so that the second communication device can be paired with the first communication device, thereby realizing automatic pairing of the first communication device and the second communication device in a single space, improving the efficiency of wireless pairing, avoiding incorrect pairing, and improving the user experience.

Transmitting, by the first communication device, a first broadcast data packet externally in response to an operation instruction — S11

Receiving, by the second communication device, the first broadcast data packet and transmitting an ultrasonic signal, where the ultrasonic signal carries identification information corresponding to the second communication device one by one — S12

Receiving, by the first communication device, the ultrasonic signal and transmitting a second broadcast data packet, where the second broadcast data packet includes the identification information and address information of the first communication device — S13

Receiving, by the second communication device, the second broadcast data packet, and in response to the identification information included in the second broadcast data packet, pairing and connecting with the corresponding first communication device based on the address information — S14

FIG. 1

## Description

The present disclosure claims a priority from Chinese patent application No. 2023103410492 entitled "WIRELESS PAIRING METHOD, COMMUNICATION SYSTEM AND COMPUTER-READABLE STORAGE MEDIUM", which is filed with CNIPA on March 31, 2023, and the entire contents of which are incorporated herein the present disclosure by reference.

## TECHNICAL FIELD

The present disclosure relates to the field of communication technology, and in particular to a wireless pairing method, a communication system and a computer-readable storage medium.

## BACKGROUND

With the advent of the mobile Internet era, wireless devices are being used more and more widely. In daily applications, different wireless devices are connected wirelessly through technologies such as Bluetooth to achieve data exchange between the two.

However, in the prior art, the process of wireless pairing between devices requires a user to select and confirm before initiating a pairing request. The wireless pairing method is cumbersome and requires multiple confirmation operations of the user, resulting in a poor user experience. Therefore, how to achieve automatic pairing and connection of wireless devices and simplify user operations is a technical problem that needs to be solved urgently.

## SUMMARY

The main technical problem solved by the present disclosure is how to achieve automatic pairing and connection of wireless devices.

In order to solve the above technical problem, the present disclosure provides a first technical solution:

a wireless pairing method is provided, the wireless pairing method is applied to a communication system, the communication system includes at least one first communication device and at least one second communication device, and the wireless pairing method includes: transmitting, by the first communication device, a first broadcast data packet externally in response to an operation instruction; receiving, by the second communication device, the first broadcast data packet and transmitting an ultrasonic signal externally, where the ultrasonic signal carries identification information corresponding to the second communication device one by one; receiving, by the first communication device, the ultrasonic signal and transmitting a second broadcast data packet externally, where the second broadcast data packet includes identification information and address information of the first communication device; and receiving, by the second communication device, the second broadcast data packet, and in response to the identification information included in the second broadcast data packet, pairing and connecting with the corresponding first communication device based on the address information.

The receiving, by the second communication device, the first broadcast data packet and transmitting an ultrasonic signal externally, where the ultrasonic signal carries identification information corresponding to the second communication device one by one includes: receiving, by the second communication device, the first broadcast data packet, and generating the ultrasonic signal based on preset frequency band information and the corresponding identification information; and transmitting, by the second communication device, the ultrasonic signal externally so that the first communication device receives the ultrasonic signal.

The receiving, by the second communication device, the first broadcast data packet, and generating the ultrasonic signal based on preset frequency band information and the corresponding identification information includes: receiving, by the second communication device, the first broadcast data packet, and encoding the identification information to obtain the ultrasonic frequency corresponding to the identification information; and generating, by the second communication device, the ultrasonic signal based on the ultrasonic frequency and the preset frequency band information.

The generating, by the second communication device, the ultrasonic signal based on the ultrasonic frequency and the preset frequency band information includes: obtaining, by the second communication device, an ultrasonic waveform corresponding to the ultrasonic frequency; obtaining, by the second communication device, a first position and a second position of the ultrasonic waveform, where the first position is an initial position of the ultrasonic waveform, and the second position is an end position of the ultrasonic waveform; adjusting, by the second communication device, waveforms at the first position and the second position based on a linear attenuation coefficient; and generating, by the second communication device, the ultrasonic signal based on the adjusted ultrasonic waveform and the preset frequency band information.

The adjusting, by the second communication device, waveforms at the first position and the second position based on a linear attenuation coefficient includes: adjusting, by the second communication device, the waveform at the first position based on the linear attenuation coefficient so that the waveform at the first position presents a slow climbing trend; and adjusting, by the second communication device, the waveform at the second position based on the linear attenuation coefficient so that the waveform at the second position presents a slow descending trend.

The linear attenuation coefficient is a ratio of an amplitude to frequency of the ultrasonic signal.

The ultrasonic signal includes a first ultrasonic signal and/or a second ultrasonic signal, and a frequency band of the first ultrasonic signal does not overlap with a frequency band of the second ultrasonic signal.

The first ultrasonic signal includes a plurality of first preset frequency points, each of the first preset frequency points corresponds to the identification information; and/or the second ultrasonic signal includes a plurality of second preset frequency points, each of the frequency points corresponds to the identification information.

Frequencies of the first ultrasonic signal and the second ultrasonic signal are greater than 18500 Hz.

The frequency band of the first ultrasonic signal is within a range of 18875 Hz~20000 Hz, and the frequency band of the second ultrasonic signal is within a range of 20375 Hz~21500 Hz.

An interval between the plurality of first preset frequency points is an integer multiple of a resolution of the first communication device, and an interval between the plurality of second preset frequency points is an integer multiple of a resolution of the second communication device.

The communication system includes a plurality of first communication devices and a plurality of second communication devices, and after the transmitting, by the first communication device, a first broadcast data packet externally in response to an operation instruction, the wireless pairing method further includes: receiving, by the first communication device, ultrasonic signals returned by the plurality of second communication devices, and confirming a connection object based on the received ultrasonic information.

In order to solve the above problems, the present disclosure provides a second technical solution: a communication system is provided, which includes a processor and a memory connected to the processor, where the memory stores program data, and the processor invokes the program data stored in the memory to perform the wireless pairing method as described above.

In order to solve the above problem, the present disclosure provides a third technical solution: a computer-readable storage medium is provided, which stores program instructions, where the program instructions are executed to perform the wireless pairing method as described above.

The beneficial effect of the present disclosure is that, compared with the prior art, the second communication device transmits an ultrasonic signal carrying identification information when receiving the first broadcast data packet of the first communication device. Since the penetration performance of ultrasound is limited, the ultrasonic signal of the second communication device is only propagated in a single space, so that the first communication device can transmit a second broadcast data packet externally based on the received ultrasonic signal, so that the second communication device can be paired with the first communication device, thereby realizing automatic pairing of the first communication device and the second communication device in a single space, improving the efficiency of wireless pairing, avoiding incorrect pairing, and improving the user experience.

BRIEF DESCRIPTION OF DRAWINGS

In order to more clearly illustrate the technical solutions in the embodiments of the present disclosure, the following briefly introduces the drawings required for use in the description of the embodiments. Obviously, the drawings described below are only some embodiments of the present disclosure. For those in the art, other drawings may be obtained based on these drawings without creative work.

FIG. 1 is a schematic diagram of a flowchart of a wireless pairing method according to an embodiment of the present disclosure.
FIG. 2 is a schematic diagram of a flowchart of a wireless pairing method according to another embodiment of the present disclosure.
FIG. 3 is a flowchart of a wireless pairing method according to still another embodiment of the present disclosure.
FIG. 4 is a schematic diagram of an ultrasonic waveform according to an embodiment of the present disclosure.
FIG. 5 is a schematic diagram of a structure of a communication system according to an embodiment of the present disclosure.
FIG. 6 is a schematic diagram of a structure of a computer-readable storage medium according to an embodiment of the present disclosure.

DESCRIPTION OF EMBODIMENTS

The present disclosure is further described in detail below in conjunction with the accompanying drawings and embodiments. It is particularly pointed out that the following embodiments are only used to illustrate the present disclosure, but not to limit the scope of the present disclosure. Similarly, the following embodiments are only some embodiments of the present disclosure rather than all embodiments. All other embodiments obtained by those skilled in the art without making creative work are within the scope of protection of the present disclosure.

"An embodiment" herein means that a particular feature, structure, or characteristic described in connection with the embodiment may be included in at least one embodiment of the present disclosure. The appearances of this phrase in various places in the description are not necessarily all referring to the same embodiment, nor are separate or alternative embodiments mutually exclusive of other embodiments. It is understood explicitly and implicitly by those skilled in the art that the embodiments described herein may be combined with other embodiments.

In the description of the present disclosure, it should be noted that, unless otherwise expressly specified and limited, the terms "installed", "arranged", "connected with" and "connected to" should be understood in a broad sense. For example, it may be a fixed connection, a detachable connection, or an integral connection; it may be a mechanical connection or an electrical connection; it may be a direct connection or a connection through an intermediate medium. For those skilled in the art, the above-mentioned specific meanings belonging to the present disclosure may be connected according to specific circumstances.

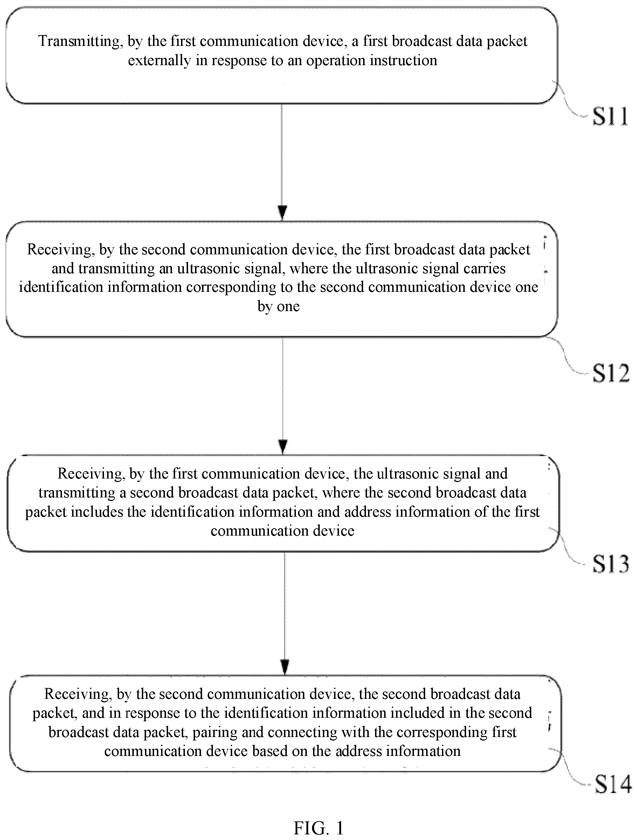

Referring to FIG. 1, FIG. 1 is a schematic diagram of a flowchart of a wireless pairing method according to an embodiment of the present disclosure. As shown in FIG. 1, in this embodiment, the wireless pairing method is applied to a communication system, the communication system includes at least one first communication device and at least one second communication device, and the wireless pairing method includes the following steps:

Step S11: transmitting, by the first communication device, a first broadcast data packet externally in response to an operation instruction.

The first communication device and the second communication device are a slave device and a master device for establishing a wireless connection. The second communication device is a device that initiates the wireless connection, and the first communication device is a device that receives the wireless connection. For example, when the wireless connection manner is Bluetooth connection, the second communication device is a master device that initiates Bluetooth connection, and the first communication device is a slave device that receives Bluetooth connection. It may be understood that there may be a plurality of first communication devices in the communication system. For example, in an office scenario, there are a plurality of first communication devices capable of Bluetooth connection in a local space. For example, the master device in the office may be connected to slave devices such as wireless microphones, wireless cameras, wireless headphones, wireless keyboards, and wireless speakers.

Alternatively, the first communication device transmits a first broadcast data packet externally in response to an operation instruction, and the operation instruction may be an operation instruction issued by a user at the first communication device. For example, the operation instruction may be a single-click, double-click or other behavior instruction issued by the user to the first communication device; or, the operation instruction may be a function activation instruction of the first communication device, for example, the first communication device transmits a first broadcast data packet externally in response to Bluetooth function being turned on; or, the operation instruction may be a voice instruction issued by the user to the first communication device, and the first communication device transmits a first broadcast data packet externally when it recognizes a preset voice message; the operation instruction is not specifically limited herein.

Step S12: receiving, by the second communication device, the first broadcast data packet and transmitting an ultrasonic signal externally, where the ultrasonic signal carries identification information corresponding to the second communication device one by one.

It may be understood that the second communication device scans external broadcast data packets at a preset time interval, and in the same preset time interval, the second communication device may scan first broadcast data packets transmitted by a plurality of first communication devices. When the second communication device receives the first broadcast data packet, the second communication device transmits an ultrasonic signal externally, and the ultrasonic signal carries preset identification information corresponding to the second communication device one by one.

The communication system may include a plurality of second communication devices, and the identification information may be an identification number of a master device defined by the second communication device in a local space. The local space may be a physical space or a local area network space used by a communication system. For example, in an office scenario, a company has a plurality of second communication devices connected to the same local area network. The identification number of the second communication device may be obtained based on information such as the local area network address of the second communication device to locate the second communication device in the local area network space.

Step S13: receiving, by the first communication device, the ultrasonic signal and transmitting a second broadcast data packet externally, where the second broadcast data packet includes the identification information and address information of the first communication device.

After receiving the ultrasonic signal transmitted by the second communication device, the first communication device decodes the ultrasonic signal to obtain the identification information carried in the ultrasonic signal, generates a second broadcast data packet based on the decoded identification information and the address information of the first communication device, and transmits the second broadcast data packet externally. The address information uniquely corresponds to the first communication device, so that the second communication device may be connected to the first communication device based on the address information.

Since ultrasound is a mechanical wave and has a high frequency, the propagation distance of ultrasound is short and its penetration ability is poor. Therefore, it may only propagate in a single space and will be reflected when encountering an obstacle. Therefore, the ultrasonic signal transmitted by the second communication device may only propagate in a single space. The first communication device located in the same space as the second communication device receives the ultrasonic signal and transmits a second broadcast data packet externally, so that the pairing range of the wireless pairing method of this embodiment is limited to a single space, thereby reducing pairing errors and improving the accuracy of automatic pairing. For example, in an office conferencing scenario, the first communication device in the first office receives the ultrasonic signal of the second communication device, indicating that the first communication device and the second communication device are located in the same space, and there will be no incorrect pairing problem when the master device in the first office is automatically paired with the slave device in the second office.

Step S14: receiving, by the second communication device, the second broadcast data packet, and in response to the identification information included in the second broadcast data packet, pairing and connecting with the corresponding first communication device based on the address information.

When the second communication device receives the second broadcast data packet, it recognizes that the second broadcast data packet includes identification information, and pairs and connects with the corresponding first communication device based on the address information.

In an embodiment of the present disclosure, when the second communication device receives the first broadcast data packet of the first communication device, it transmits an ultrasonic signal carrying identification information. Since the penetration performance of ultrasound is limited, the ultrasonic signal of the second communication device only propagates in a single space, so that the first communication device may transmit a second broadcast data packet externally based on the received ultrasonic signal, so that the second communication device may be paired with the first communication device, thereby realizing automatic pairing of the first communication device and the second communication device in a single space, improving the efficiency of wireless pairing, avoiding incorrect pairing, and improving the user experience.

Optionally, step S12 includes the following steps: receiving, by the second communication device, the first broadcast data packet, and generating the ultrasonic signal based on preset frequency band information and the corresponding identification information; and transmitting, by the second communication device, the ultrasonic signal externally so that the first communication device receives the ultrasonic signal.

Alternatively, the second communication device generates an ultrasonic signal in response to the first broadcast data packet based on the preset frequency band information and the identification information of the second communication device. The identification information of the second communication device may be an identification code of the second communication device, and the preset frequency band information is an ultrasonic frequency band information set based on the preset coding rule. For example, an ultrasonic frequency band is pre-selected, and a plurality of frequency points are selected in the frequency band. The frequency points are associated with the preset identification code, so that the identification code of the second communication device is represented by the preset frequency band information, so that the ultrasonic signal carries the identification information of the second communication device.

After the second communication device generates an ultrasonic signal, it transmits the ultrasonic signal externally. Due to the characteristics of ultrasound, the ultrasonic signal only propagates in the space where the second communication device is located. For example, in a plurality of service spaces, the ultrasonic signal only propagates in the space where the second communication device is located. After the first communication device in the same space receives the ultrasonic signal and returns the second broadcast data packet, the second communication device pairs and connects with the first communication device based on the second broadcast data packet. Therefore, the user does not need to manually select the first communication device to be connected in the second communication device, and the second communication device will not transmit a pairing request to the first communication device in other service spaces, thereby improving the accuracy of wireless pairing.

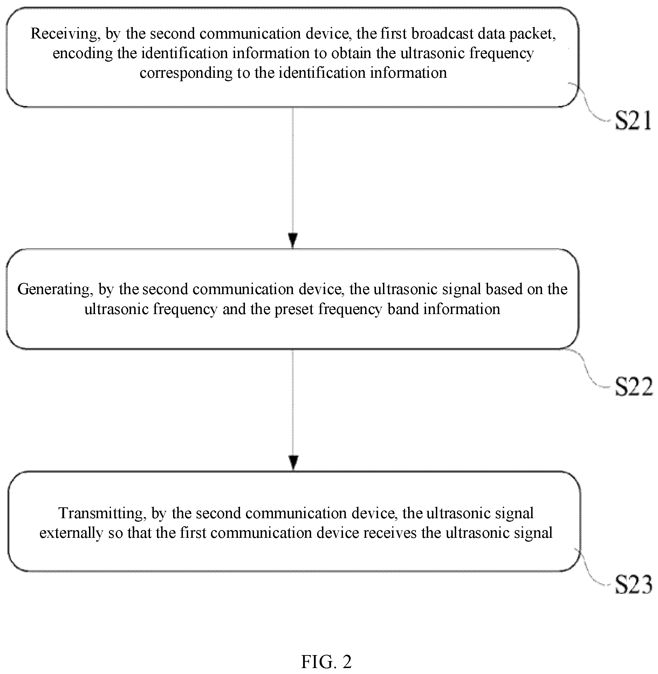

Optionally, referring to FIG. 2, FIG. 2 is a schematic diagram of a flowchart of a wireless pairing method according to another embodiment of the present disclosure. As shown in FIG. 2, in this embodiment, step S12 includes the following steps:

Step S21: receiving, by the second communication device, the first broadcast data packet, and encoding the identification information to obtain the ultrasonic frequency corresponding to the identification information.

After receiving the first broadcast data packet, the second communication device performs encoding based on the identification information preset by the second communication device to obtain the ultrasonic frequency corresponding to the identification information. Alternatively, the ultrasonic signal may include a plurality of frequency bands. Within a preset frequency band, several frequency points may be selected, and each frequency point may correspond to the identification information, so as to identify the second communication device through the frequency data of the frequency point.

For example, in an optional implementation, within a first preset frequency band, 10 frequency points are selected to represent 10 numbers from 0 to 9, where the selected 10 frequency points may be phase-continuous frequency points or phase-discontinuous frequency points. For example, the selected frequency points may be as follows:

CH1 = [18875, 19000, 19125, 19250, 19375, 19500, 19625, 19750, 19875, 20000];

Where CH1 represents the first preset frequency band, and the frequency unit of the frequency point is Hz.

After the second communication device receives the first broadcast data packet, based on the identification information being 5, an ultrasonic frequency, obtained by the second communication device, corresponding to the identification information is 19500 Hz.

In another optional implementation manner, in the first preset frequency band, 10 frequency points are selected to represent the 10 numbers 0 to 9; and in the second preset frequency band, 10 frequency points are also selected to represent the 10 numbers 0 to 9. For example, the selected frequency points may be as follows:

CH1 = [18875, 19000, 19125, 19250, 19375, 19500, 19625, 19750, 19875, 20000];

CH2 = [20375, 20500, 20625, 20750, 20875, 21000, 21125, 21250, 21375, 21500];

Where CH1 represents the first preset frequency band, CH2 represents the second preset frequency band, and the frequency unit of the frequency point is Hz. It may be understood that the above-mentioned frequency selection range is only for example, and the interval of the selected frequency points is related to the resolution of the first communication device or the second communication device. For example, the frequency interval may be an integer multiple of the resolution of the first communication device receiving Bluetooth connection. The frequency interval is not specifically limited here.

After the second communication device receives the first broadcast data packet, based on the identification information 10, ultrasonic frequencies, obtained by the second communication device, corresponding to the identification information are CH1 = 19000 Hz and CH2 = 20500 Hz.

Step S22: generating, by the second communication device, the ultrasonic signal based on the ultrasonic frequency and the preset frequency band information.

The second communication device generates a corresponding ultrasonic signal based on the acquired ultrasonic frequency and preset frequency band information.

Step S23: transmitting, by the second communication device, the ultrasonic signal externally so that the first communication device receives the ultrasonic signal.

The second communication device transmits an ultrasonic signal externally. Due to the characteristics of ultrasound, the ultrasonic signal only propagates in the space where the second communication device is located, thereby realizing automatic pairing of the first communication device and the second communication device. At the same time, the second communication device will not transmit a pairing request to the first communication device in other business spaces, thereby improving the accuracy of wireless pairing and improving the user experience.

Furthermore, since the frequency of the ultrasonic signal is relatively high, when the second communication device transmits an ultrasonic signal, if a speaker in the business space where the second communication device is located starts and stops transmitting, due to the sudden change of the sound, the transmitted ultrasonic signal will cause low-frequency noise to be generated, affecting the user experience.

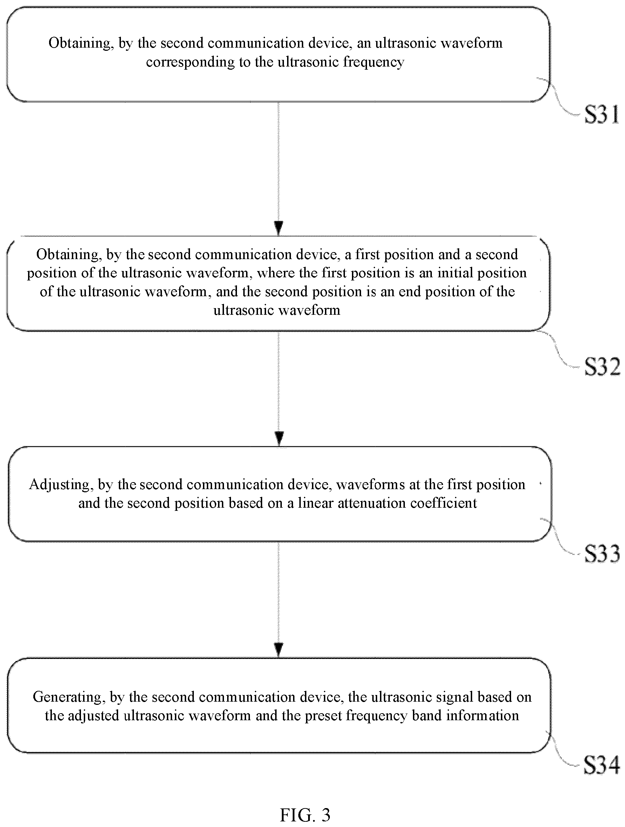

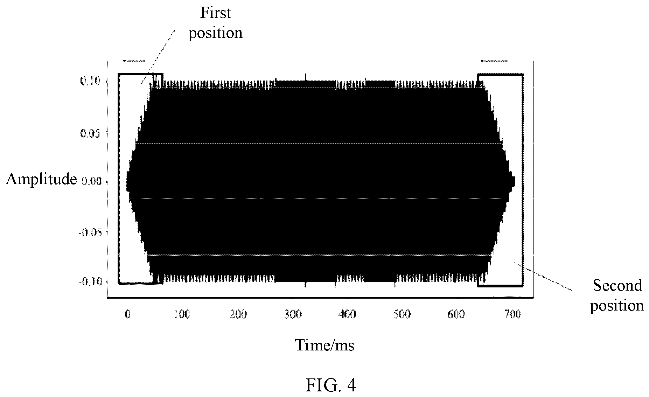

Referring to FIGS. 3-4, FIG. 3 is a flowchart of a wireless pairing method according to still another embodiment of the present disclosure, and FIG. 4 is a schematic diagram of an ultrasonic waveform according to an embodiment of the present disclosure. As shown in FIG. 3, step S22 further includes the following steps:

Step S31: obtaining, by the second communication device, an ultrasonic waveform corresponding to the ultrasonic frequency.

As shown in FIG. 4, after obtaining the ultrasonic frequency, the second communication device further obtains the ultrasonic waveform corresponding to the ultrasonic frequency. The ultrasonic waveform is a waveform formed based on the ultrasonic frequency, and the waveform may be represented by amplitude.

Step S32: obtaining, by the second communication device, a first position and a second position of the ultrasonic waveform, where the first position is an initial position of the ultrasonic waveform, and the second position is an end position of the ultrasonic waveform.

After the second communication device obtains the ultrasonic waveform, it obtains the first position and the second position of the ultrasonic waveform, where the first position is an initial position of the ultrasonic waveform, and the second position is an end position of the ultrasonic waveform. It may be understood that the first position is a position formed by a preset time interval from the start of the ultrasonic waveform transmitting, and the second position is a position formed by the ultrasonic waveform at the end of the preset time interval. For example, the first position may be the waveform position formed from 0-80ms in the ultrasonic waveform, and the second position may be the waveform position formed from 620-700ms.

Step S33: adjusting, by the second communication device, waveforms at the first position and the second position based on a linear attenuation coefficient.

After obtaining the first position and the second position of the ultrasonic waveform, the second communication device adjusts the waveform at the first position and the second position based on the linear attenuation coefficient. Alternatively, the second communication device adjusts the waveform at the first position based on the linear attenuation coefficient so that the waveform at the first position presents a slow climbing trend, and the second communication device adjusts the waveform at the second position based on the linear attenuation coefficient so that the waveform at the second position presents a slow descending trend.

In an optional implementation manner, the waveform adjustment formula is as follows:

$$y = kx;$$

Where y is the amplitude of the ultrasonic signal, x is the frequency of the ultrasonic signal, and k is the linear attenuation coefficient. The smaller the absolute value of the linear attenuation coefficient k is, that is, the smaller the slope is, the smaller the amplitude of the adjusted waveform is, and the smaller the noise is. However, a slope that is too low will result in a single-frame waveform with a too long time length, therefore, the actual value of the linear attenuation coefficient k needs to be selected based on the symbol length of the actual application, and is not specifically limited here.

Step S34: generating, by the second communication device, the ultrasonic signal based on the adjusted ultrasonic waveform and the preset frequency band information.

After the second communication device adjusts the waveforms at the first position and the second position, it generates corresponding ultrasonic signals based on the adjusted ultrasonic waveforms and the preset frequency band information. Since the initial position and end position of the ultrasonic waveform are adjusted through the linear attenuation coefficient, the second communication device may achieve slow entry and slow exit of the ultrasonic signal when transmitting the ultrasonic signal for signal broadcasting, thereby realizing imperceptible broadcasting of the ultrasonic signal, reducing the noise generated by the ultrasonic signal, and improving the user experience.

Optionally, the ultrasonic signal includes a first ultrasonic signal and/or a second ultrasonic signal, and a frequency band of the first ultrasonic signal does not overlap with a frequency band of the second ultrasonic signal.

Alternatively, the first ultrasonic signal is an ultrasonic signal in a first preset frequency band, and the second ultrasonic signal is an ultrasonic signal in a second preset frequency band. The frequency band of the first ultrasonic signal does not overlap with the frequency band of the second ultrasonic signal. For example, the frequency band of the first ultrasonic signal is between [18875, 20000], and the frequency band of the second ultrasonic signal is between [20375, 21500]. The frequency bands of the first ultrasonic signal and the second ultrasonic signal are interlaced so that the second communication device corresponds the identification information to the first ultrasonic signal and/or the second ultrasonic signal.

The first ultrasonic signal includes a plurality of first preset frequencies, each of the first preset frequencies corresponds to identification information; and/or the second ultrasonic signal includes a plurality of second preset frequencies, each of the second preset frequencies corresponds to identification information.

Alternatively, the first preset frequency point and/or the second preset frequency point may be a phase-continuous frequency point or a phase-discontinuous frequency point. For example, when the frequency band of the first ultrasonic signal is between [18875, 20000], the first preset frequency point may be 10 frequency points between [18875, 20000]; when the frequency band of the second ultrasonic signal is between [20375, 21500], the second preset frequency point may be 10 frequency points between [20375, 21500]; in one embodiment, the 10 frequency points of the first ultrasonic signal or the second ultrasonic signal respectively correspond to the identification information of 10 second communication devices, so that the second communication device obtains the corresponding ultrasonic frequency through the identification information; in another embodiment, the 10 frequency points of the first ultrasonic signal and the 10 frequency points of the second ultrasonic signal correspond to the identification information of the second communication device, so that the number of identifiable second communication devices reaches 100.

It may be understood that when the number of second communication devices in the communication system is small, for example, when the number of second communication devices is less than 20, the second communication device may be identified by the first ultrasonic signal or the second ultrasonic signal to reduce the computing power of the communication system and improve the efficiency of wireless pairing; when the number of second communication devices in the communication system is large, for example, when the number of second communication devices is greater than or equal to 20, the second communication device may be identified by the first ultrasonic signal and the second ultrasonic signal to achieve automatic pairing between communication devices.

The frequencies of the first ultrasonic signal and the second ultrasonic signal are greater than 18500 Hz.

Alternatively, the frequencies of the first ultrasonic signal and the second ultrasonic signal are greater than 18500 Hz, so that the frequency range of the first ultrasonic signal and the second ultrasonic signal is within a range that is difficult for the human body to detect, further reducing the noise when the second communication device transmits the ultrasonic signal and improving the user experience.

The frequency band of the first ultrasonic signal is within the range of 18875Hz~20000Hz, the frequency band of the second ultrasonic signal is within the range of 20375Hz~21500Hz, and the second communication device corresponds the identification information to the ultrasonic information through the first preset frequency point and the second preset frequency point.

Optionally, there may be a plurality of first communication devices and a plurality of second communication devices in the same space of the communication system. After the first communication device initiates a first broadcast data packet externally, it will receive ultrasonic signals returned by a plurality of second communication devices. At this time, the first communication device needs to confirm the connection object based on the received ultrasonic information. For example, in the same conference room of an office scene, a second communication device A, a second communication device B and a second communication device C are set up. After the first communication device initiates a first broadcast data packet, the second communication device A, the second communication device B and the second communication device C receive the first broadcast data packet and transmit an ultrasonic signal corresponding to the first communication device. The first communication device judges whether the second communication device corresponds to the ultrasonic signal based on the received ultrasonic signal to determine the second communication device that needs to be connected.

Compared with the prior art, through the wireless pairing method of this embodiment, the second communication device transmits an ultrasonic signal carrying identification information when receiving the first broadcast data packet of the first communication device. Since the penetration performance of ultrasound is limited, the ultrasonic signal of the second communication device only propagates in a single space, so that the first communication device can transmit a second broadcast data packet externally based on the received ultrasonic signal, so that the second communication device can be paired with the first communication device, thereby realizing automatic pairing of the first communication device and the second communication device in a single space, improving the efficiency of wireless pairing, and avoiding incorrect pairing; the ultrasonic signal of the second communication device is processed by a linear attenuation coefficient to reduce the broadcast noise of the ultrasonic signal, realize the imperceptible broadcast of the ultrasonic signal, and improve the user experience.

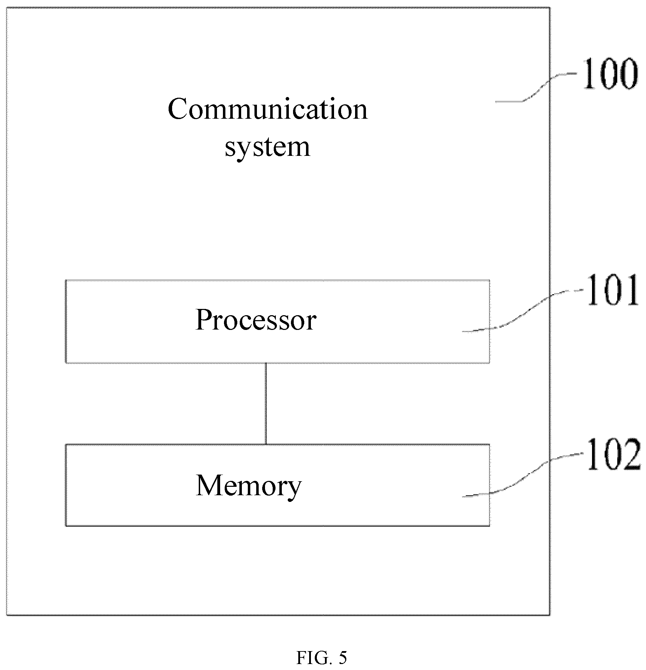

Referring to FIG. 5, FIG. 5 is a schematic diagram of a structure of a communication system according to an embodiment of the present disclosure. As shown in FIG. 5, the communication system 100 includes a processor 101 and a memory 102 connected to the processor 101, where the memory 102 stores program data, and the processor 101 invokes the program data stored in the memory 102 to perform the above-mentioned wireless pairing method.

Optionally, in one embodiment, the processor 101 is configured to perform program data to implement the following method: transmitting, by the first communication device, a first broadcast data packet externally in response to an operation instruction; receiving, by the second communication device, the first broadcast data packet and transmitting, by the second communication device, an ultrasonic signal externally, where the ultrasonic signal carries identification information corresponding to the second communication device one by one; receiving, by the first communication device, the ultrasonic signal and transmitting a second broadcast data packet externally, where the second broadcast data packet includes the identification information and address information of the first communication device; and receiving, by the second communication device, the second broadcast data packet, and in response to the identification information included in the second broadcast data packet, pairing and connecting with the corresponding first communication device based on the address information.

The processor 101 may also be referred to as Central Processing Unit (CPU). The processor 101 may be an electronic chip having signal processing capability. The processor 101 may also be a general purpose processor, a digital signal processor (DSP), an application specific integrated circuit (ASIC), a field programmable gate array (FPGA) or other programmable logic device, a discrete gate or transistor logic device, or a discrete hardware component. A general purpose processor may be a microprocessor, or the processor may be any conventional processor or the like.

The memory 102 may be a memory stick, a TF card, etc., and may store all information in the communication system 100 , including input original data, computer programs, intermediate operation results, and final operation results, all of which are stored in the memory 102 . It stores and retrieves information based on the location specified by processor 101. With the memory 102, the communication system 100 has a memory function and may ensure normal operation. The memory 102 of the communication system 100 may be divided into a main memory (internal memory) and an auxiliary memory (external memory) according to the usage. There is also a classification method of dividing it into an external memory and an internal memory. External storage is usually magnetic media or optical disks, etc., which may preserve information for a long time. Memory refers to the storage component on the motherboard, which is configured to store the data and programs currently being executed, but it is only used to temporarily store programs and data. If the power is turned off or the power is cut off, the data will be lost.

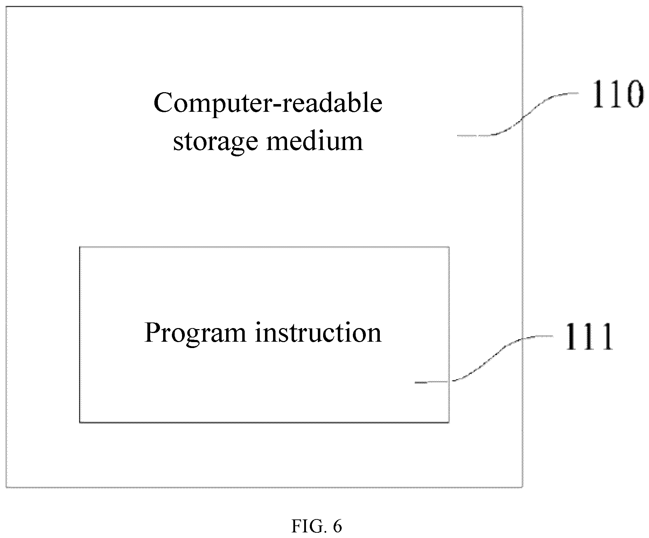

Referring to FIG. 6, FIG. 6 is a schematic diagram of a structure of a computer-readable storage medium according to an embodiment of the present disclosure. As shown in FIG. 6, the computer-readable storage medium 110 stores program instructions 111 capable of implementing all the above methods.

If the integrated units of the functional units in the various embodiments of the present disclosure are implemented in the form of software functional units and sold or used as independent products, they may be stored in the computer-readable storage medium 110. Based on this understanding, the technical solution of the present disclosure, in essence or in other words, the part that contributes to the prior art or all or part of the technical solution may be embodied in the form of a software product. The computer-readable storage medium 110 includes a number of instructions in a program instruction 111 to enable a computer device (which may be a personal computer, a system server, or a network device, etc.), an electronic device (such as MP3, MP4, etc., or a mobile terminal such as a mobile phone, a tablet computer, a wearable device, or a desktop computer, etc.) or a processor to perform all or part of the steps of each implementation method of the present disclosure.

Those skilled in the art should understand that the embodiments of the present disclosure may be provided as methods, systems, or computer program products. Therefore, the present disclosure may take the form of an entirely hardware embodiment, an entirely software embodiment, or an embodiment combining software and hardware aspects. Moreover, the present disclosure may take the form of a computer program product implemented on one or more computer-readable storage media 110 (including but not limited to disk storage, CD-ROM, optical storage, etc.) containing computer-usable program codes.

The present disclosure is described by flowcharts and/or block diagrams of methods, devices (systems), and computer program products based on embodiments of the present disclosure. It should be understood that each process and/or block in the flowcharts and/or block diagrams, and combinations of processes and/or blocks in the flowcharts and/or block diagrams may be implemented by the computer-readable storage medium 110. These computer-readable storage media 110 may be provided to a processor of a general-purpose computer, a special-purpose computer, an embedded processor, or other programmable data processing device to produce a machine, so that the program instructions 111 executed by the processor of the computer or other programmable data processing device produce a device for implementing the functions specified in one or more processes in the flowchart and/or one or more boxes in the block diagram.

These computer-readable storage media 110 may also be stored in a computer-readable memory that may direct a computer or other programmable data processing device to operate in a specific manner, so that the program instructions 111 stored in the computer-readable storage medium 110 produce a manufactured product including an instruction device that implements the functions specified in one or more processes in the flowchart and/or one or more boxes in the block diagram.

These computer-readable storage media 110 may also be loaded onto a computer or other programmable data processing device so that a series of operating steps are performed on the computer or other programmable device to produce computer-implemented processing, so that the program instructions 111 executed on the computer or other programmable device provide steps for implementing the functions specified in one or more processes in the flowchart and/or one or more boxes in the block diagram.

Any process or method description in a flowchart or otherwise described herein may be understood to represent a module, fragment or portion of code that includes one or more performable instructions for implementing the steps of a specific logical function or process, and the scope of the preferred embodiments of the present disclosure includes alternative implementations in which functions may not be performed in the order shown or discussed, including performing functions in a substantially simultaneous manner or in the reverse order depending on the functions involved, which should be understood by those skilled in the art to which the embodiments of the present disclosure belong.

The logic and/or steps represented in the flowchart or otherwise described herein, for example, may be considered as an ordered list of performable instructions for implementing logical functions, which may be specifically implemented in any computer-readable medium for use by an instruction execution system, device or equipment (which may be a personal computer, server, network device or other system that may fetch instructions from and perform instructions of the instruction execution system, device or equipment), or used in combination with these instruction execution systems, devices or devices. The above description is only an implementation manner of the present disclosure, and does not limit the patent scope of the present disclosure. Any equivalent structure or equivalent process transformation made using the contents of the description and drawings of the present disclosure, or directly or indirectly used in other related technical fields, are also included in the patent protection scope of the present disclosure.

The above description is only an implementation manner of the present disclosure, and does not limit the patent scope of the present disclosure. Any equivalent structure or equivalent process transformation made using the contents of description and drawings of the present disclosure, or directly or indirectly used in other related technical fields, are also included in the patent protection scope of the present disclosure.

**Claims**

1. A wireless pairing method, wherein the wireless pairing method is applied to a communication system, the communication system includes at least one first communication device and at least one second communication device, and the wireless pairing method comprises:

   transmitting, by the first communication device, a first broadcast data packet externally in response to an operation instruction;
   receiving, by the second communication device, the first broadcast data packet and transmitting an ultrasonic signal externally, wherein the ultrasonic signal carries identification information corresponding to the second communication device one by one;
   receiving, by the first communication device, the ultrasonic signal and transmitting a second broadcast data packet externally, wherein the second broadcast data packet includes identification information and address information of the first communication device; and
   receiving, by the second communication device, the second broadcast data packet, and in response to the identification information included in the second broadcast data packet, pairing and connecting with the corresponding first communication device based on the address information.

2. The wireless pairing method of claim 1, wherein the receiving, by the second communication device, the first broadcast data packet and transmitting an ultrasonic signal externally, wherein the ultrasonic signal carries identification information corresponding to the second communication device one by one comprises:

   receiving, by the second communication device, the first broadcast data packet, and generating, by the second communication device, the ultrasonic signal based on preset frequency band information and the corresponding identification information; and
   transmitting, by the second communication device, the ultrasonic signal externally so that the first communication device receives the ultrasonic signal.

3. The wireless pairing method of claim 2, wherein the receiving, by the second communication device, the first broadcast data packet, and generating the ultrasonic signal based on the preset frequency band information and the corresponding identification information comprises:

   receiving, by the second communication device, the first broadcast data packet, and encoding the identification information to obtain the ultrasonic frequency corresponding to the identification information; and
   generating, by the second communication device, the ultrasonic signal based on the ultrasonic frequency and the preset frequency band information.

4. The wireless pairing method of claim 3, wherein the generating, by the second communication device, the ultrasonic signal based on the ultrasonic frequency and the preset frequency band information comprises:

   obtaining, by the second communication device, an ultrasonic waveform corresponding to the ultrasonic frequency;
   obtaining, by the second communication device, a first position and a second position of the ultrasonic waveform, wherein the first position is an initial position of the ultrasonic waveform, and the second position is an end position of the ultrasonic waveform;
   adjusting, by the second communication device, waveforms at the first position and the second position based on a linear attenuation coefficient; and
   generating, by the second communication device, the ultrasonic signal based on the adjusted ultrasonic waveform and the preset frequency band information.

5. The wireless pairing method of claim 4, wherein the adjusting, by the second communication device, waveforms at the first position and the second position based on the linear attenuation coefficient comprises:

adjusting, by the second communication device, the waveform at the first position based on the linear attenuation coefficient so that the waveform at the first position presents a slow climbing trend; and

adjusting, by the second communication device, the waveform at the second position based on the linear attenuation coefficient so that the waveform at the second position presents a slow descending trend.

6. The wireless pairing method of claim 4, wherein the linear attenuation coefficient is a ratio of an amplitude to frequency of the ultrasonic signal.

7. The wireless pairing method of claim 1, wherein the ultrasonic signal includes a first ultrasonic signal and/or a second ultrasonic signal, and a frequency band of the first ultrasonic signal does not overlap with a frequency band of the second ultrasonic signal.

8. The wireless pairing method of claim 7, wherein the first ultrasonic signal includes a plurality of first preset frequency points, each of the first preset frequency points corresponds to the identification information; and/or the second ultrasonic signal includes a plurality of second preset frequency points, each of the frequency points corresponds to the identification information.

9. The wireless pairing method of claim 8, wherein frequencies of the first ultrasonic signal and the second ultrasonic signal are greater than 18500 Hz.

10. The wireless pairing method of claim 8, wherein the frequency band of the first ultrasonic signal is within a range of 18875 Hz~20000 Hz, and the frequency band of the second ultrasonic signal is within a range of 20375 Hz~21500 Hz.

11. The wireless pairing method of claim 8, wherein an interval between the plurality of first preset frequency points is an integer multiple of a resolution of the first communication device, and an interval between the plurality of second preset frequency points is an integer multiple of a resolution of the second communication device.

12. The wireless pairing method of claim 1, wherein the communication system includes a plurality of first communication devices and a plurality of second communication devices, and after the transmitting, by the first communication device, a first broadcast data packet externally in response to an operation instruction, the wireless pairing method further comprises:
receiving, by the first communication device, ultrasonic signals returned by the plurality of second communication devices, and confirming a connection object based on the received ultrasonic information.

13. A communication system, wherein the communication system comprises a processor and a memory connected to the processor, the memory stores program data, and the processor invokes the program data stored in the memory to perform the wireless pairing method of any one of claims 1-12.

14. A computer-readable storage medium, wherein the computer-readable storage medium stores program instructions, the program instructions are executed to perform the wireless pairing method of any one of claims 1-12.

Transmitting, by the first communication device, a first broadcast data packet externally in response to an operation instruction

S11

Receiving, by the second communication device, the first broadcast data packet and transmitting an ultrasonic signal, where the ultrasonic signal carries identification information corresponding to the second communication device one by one

S12

Receiving, by the first communication device, the ultrasonic signal and transmitting a second broadcast data packet, where the second broadcast data packet includes the identification information and address information of the first communication device

S13

Receiving, by the second communication device, the second broadcast data packet, and in response to the identification information included in the second broadcast data packet, pairing and connecting with the corresponding first communication device based on the address information

S14

FIG. 1

Receiving, by the second communication device, the first broadcast data packet, encoding the identification information to obtain the ultrasonic frequency corresponding to the identification information

S21

Generating, by the second communication device, the ultrasonic signal based on the ultrasonic frequency and the preset frequency band information

S22

Transmitting, by the second communication device, the ultrasonic signal externally so that the first communication device receives the ultrasonic signal

S23

FIG. 2

Obtaining, by the second communication device, an ultrasonic waveform corresponding to the ultrasonic frequency

S31

Obtaining, by the second communication device, a first position and a second position of the ultrasonic waveform, where the first position is an initial position of the ultrasonic waveform, and the second position is an end position of the ultrasonic waveform

S32

Adjusting, by the second communication device, waveforms at the first position and the second position based on a linear attenuation coefficient

S33

Generating, by the second communication device, the ultrasonic signal based on the adjusted ultrasonic waveform and the preset frequency band information

S34

FIG. 3

FIG. 4

FIG. 5

Computer-readable
storage medium — 110

Program instruction — 111

FIG. 6

## INTERNATIONAL SEARCH REPORT

| International application No. |
| --- |
| **PCT/CN2024/082517** |

### A. CLASSIFICATION OF SUBJECT MATTER

H04W 76/10(2018.01)i

According to International Patent Classification (IPC) or to both national classification and IPC

### B. FIELDS SEARCHED

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNTXT, DWPI, ENTXTC, VEN, CNABS: 配对, 绑定, 超声, 广播, 地址, 标识, 频率, 频段, 位置, pair, binding, ultrasonic, broadcast, address, ID, frequency, location

### C. DOCUMENTS CONSIDERED TO BE RELEVANT

| Category* | Citation of document, with indication, where appropriate, of the relevant passages | Relevant to claim No. |
| --- | --- | --- |
| X | CN 115733704 A (HISENSE VISUAL TECHNOLOGY CO., LTD.) 03 March 2023 (2023-03-03) description, paragraphs 0098-0182 | 1-3, 7-14 |
| A | CN 115733704 A (HISENSE VISUAL TECHNOLOGY CO., LTD.) 03 March 2023 (2023-03-03) description, paragraphs 0098-0182 | 4-6 |
| A | CN 106792493 A (BEIJING XIAOMI MOBILE SOFTWARE CO., LTD.) 31 May 2017 (2017-05-31) entire document | 1-14 |
| A | CN 108684029 A (VIVO COMMUNICATION TECHNOLOGY CO., LTD.) 19 October 2018 (2018-10-19) entire document | 1-14 |
| A | EP 3013080 A1 (SAMSUNG ELECTRONICS CO., LTD.) 27 April 2016 (2016-04-27) entire document | 1-14 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 June 2024** | **20 June 2024** |

| Name and mailing address of the ISA/CN | Authorized officer |
| --- | --- |
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/082517**

| Patent document cited in search report | | | Publication date (day/month/year) | Patent family member(s) | | | Publication date (day/month/year) |
|---|---|---|---|---|---|---|---|
| CN | 115733704 | A | 03 March 2023 | None | | | |
| CN | 106792493 | A | 31 May 2017 | None | | | |
| CN | 108684029 | A | 19 October 2018 | None | | | |
| EP | 3013080 | A1 | 27 April 2016 | US | 2016119962 | A1 | 28 April 2016 |
| | | | | KR | 20160047149 | A | 02 May 2016 |
| | | | | CN | 105554904 | A | 04 May 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 2023103410492